(19) Europäisches Patentamt
European Patent Office
Office européen des brevets

(11) **EP 3 516 270 B1**

(12) **FASCICULE DE BREVET EUROPEEN**

(45) Date de publication et mention
de la délivrance du brevet:
**24.02.2021 Bulletin 2021/08**

(21) Numéro de dépôt: **17751800.8**

(22) Date de dépôt: **11.07.2017**

(51) Int Cl.:
***F16H 61/04*** *(2006.01)*

(86) Numéro de dépôt international:
**PCT/FR2017/051909**

(87) Numéro de publication internationale:
**WO 2018/055247 (29.03.2018 Gazette 2018/13)**

(54) **PROCEDE DE SYNCHRONISATION D'UN PIGNON FOU SUR UN ARBRE DE BOITE DE VITESSES**

VERFAHREN ZUR SYNCHRONISATION EINES MITLAUFZAHNRADS BEI EINER GETRIEBEWELLE

METHOD FOR SYNCHRONISING AN IDLER GEAR ON A GEARBOX SHAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.09.2016 FR 1658953**

(43) Date de publication de la demande:
**31.07.2019 Bulletin 2019/31**

(73) Titulaires:
• **Renault S.A.S.**
**92100 Boulogne-Billancourt (FR)**
• **Nissan Motor Co., Ltd.**
**Yokohama-shi, Kanagawa 221-0023 (JP)**

(72) Inventeur: **MERIENNE, Ludovic**
**91190 Gif Sur Yvette (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
**EP-A1- 2 730 814          EP-A1- 2 834 541**
**EP-A1- 2 986 871          WO-A1-2011/036394**
**DE-A1- 19 956 527         DE-A1-102014 219 099**
**DE-A1-102015 010 598**

**Description**

La présente invention se rapporte au domaine de la commande des passages de vitesses, sur une boîte de vitesses.

Plus précisément, elle a pour objet un procédé de synchronisation d'un pignon fou avant son couplage sur un arbre secondaire de boîte de vitesses à arbres parallèles comportant au moins un arbre primaire relié à une source motrice d'un véhicule, au moins un arbre secondaire portant le pignon fou pour transmettre le couple de la source motrice aux roues du véhicule sur un rapport de transmission, et au moins un moyen de couplage du pignon fou son arbre dépourvu d'organes de synchronisation mécanique.

Cette invention d'applique sur toute transmission hybride ou électrique à arbres parallèles, dans laquelle la synchronisation des pignons de vitesses, libres en rotation sur un arbre lié aux roues du véhicule, est assurée grâce au pilotage, en couple ou en régime d'une source de traction électrique ou thermique. Elle trouve une application privilégiée, mais non limitative, lorsque le moyen de couplage déplacé sur l'arbre pour assurer la liaison mécanique d'un pignon fou muni de dents de crabotage à front plat, ou clabots.

Cette invention trouve un intérêt particulier sur un GMP hybride composé d'un moteur thermique relié à un premier arbre d'entrée de boîte de vitesses qui peut transmettre son couple aux roues sur différents rapports de transmission, d'une première machine électrique reliée à un deuxième arbre d'entrée de celle-ci, et d'une deuxième machine électrique reliée alternativement au premier ou au deuxième arbre d'entrée de la boîte.

Lorsque l'organe de couplage du pignon fou sur son arbre n'est pas associé à un organe de synchronisation mécanique permettant de réduire leur différentiel de vitesse avant le couplage, et qu'une source de traction reste liée à l'arbre primaire de la boîte, on procède à la synchronisation du pignon fou sur son arbre, en pilotant la source de traction pendant l'opération.

Pour pouvoir engager un rapport en pilotant la synchronisation du crabot et du pignon fou, il est nécessaire d'établir un différentiel de régime entre ces éléments, généralement fixé de manière à limiter la durée de blocage dent contre dent, afin que les crabots du baladeur puissent s'insérer entre deux dents du pignon fou. Le différentiel de régime peut par exemple être régulé autour de 50rpm. Lors de l'accouplement, il disparaît instantanément, car le régime de la source de traction est porté instantanément à une valeur qui lui est imposée par l'arbre secondaire sur le nouveau rapport. La source de traction pilotée encaisse un choc, dont l'énergie est absorbée par le véhicule. Au-delà d'une certaine quantité d'énergie absorbée, le choc est ressenti désagréablement par les occupants du véhicule.

Par la publication EP 2 834 541, on connaît un procédé de synchronisation d'un pignon fou avant son couplage sur un arbre secondaire de boîte de vitesses à arbres parallèles, dépourvue d'organes de synchronisation mécaniques. Selon ce procédé, la source motrice est pilotée avant le couplage, sur un régime lui imposant un différentiel de régime par rapport à son régime de synchronisation sur le rapport qui va être engagé. Comme indiqué ci-dessus, si le différentiel de régime est trop élevé, sa disparition lors de l'engagement du nouveau rapport, peut être ressentie désagréablement par les usagers du véhicule. Les documents WO2011/036394 A1, DE102015010598 A1, EP2730814 A1 et DE19956527 A1 montrent aussi des procédés de synchronisation d'un pignon fou.

La présente invention a pour but d'éviter ces inconvénients liés à la synchronisation pilotée des régimes de couplage.

Dans ce but, elle propose que le différentiel de régime soit déterminé en fonction de la quantité d'énergie absorbée par le véhicule à l'instant du couplage en réponse à sa disparition.

De préférence, le différentiel de régime est calculé pour maintenir la quantité d'énergie absorbée par le véhicule, en dessous d'un seuil de tolérance.

La présente invention sera mieux comprise à la lecture de la description suivante d'un mode de réalisation particulier de celle-ci, en se reportant aux dessins annexés, sur lesquels :

- la figure 1 est un schéma d'architecture de boîte de vitesses hybride,
- la figure 2 illustre le couplage d'un pignon,
- la figure 3 reproduit des courbes de position et de régime du pendant un passage, et
- les figures 4, 5 et 6 reproduisent des courbes de différentiel de régime en fonction de la vitesse de l'arbre secondaire de boîte.

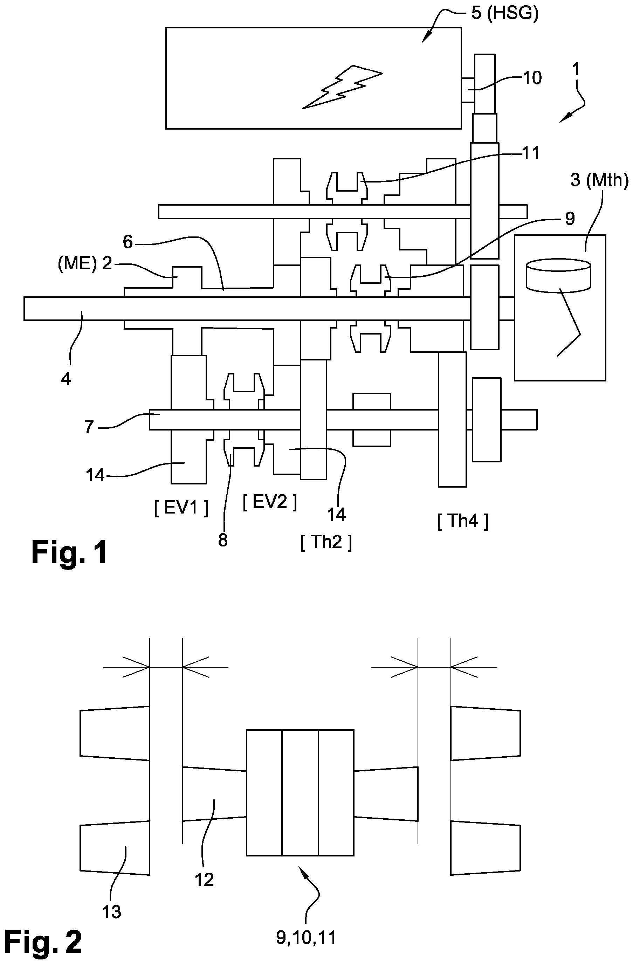

La boîte de vitesses 1 de la figure 1 est par exemple de type « robotisée », c'est-à-dire que son fonctionnement est celui d'une boîte manuelle, mais que les passages de vitesses sont automatisés. Sur le schéma, on a représenté une machine électrique, dite HSG (pour alterno-démarreur haute tension) 5, un moteur thermique 3 sur un arbre primaire plein 4. Une autre machine électrique 2 dite ME, plus puissante que la première, est montée sur un arbre primaire creux 6. L'arbre secondaire 7 de la boîte, est relié au différentiel (non représenté), puis aux roues du véhicule.

Le premier moyen de couplage 8, situé sur l'arbre secondaire, 7 permet de modifier le rapport de la machine électrique ME 2, de façon indépendante du reste de la boîte, pour disposer de deux rapports électriques [EV1] et [EV2].

Le deuxième moyen de couplage 9, situé sur l'arbre primaire plein 4, permet de modifier le rapport du moteur thermique 3 de façon indépendante des rapports électriques, pour établir deux rapports thermiques [Th2] et [Th4], indépendamment du rapport électrique. Le troisième moyen de couplage 11, situé sur l'arbre de transfert 10, permet d'établir un troisième rapport thermique [Th3], lorsqu'il se déplace vers la droite sur le schéma. Il est possible de choisir de façon indépendante, à chaque instant, le rapport voulu sur la première machine électrique 2 (ME) et celui voulu sur le groupe moteur thermique 3 (Mth) et la deuxième machine électrique 5 (HSG). Les combinaisons des rapports thermiques et des rapports électriques permettent de réaliser des rapports hybrides.

La boîte de vitesse de la figure 1 est une boite de vitesse hybride, dont les organes de couplage, sont dépourvus de moyens de synchronisation mécanique (synchroniseurs), et présentent des dents de crabotage plates 12, appelées généralement « clabots », venant à la rencontre de dents d'accouplement 13, également plates, des pignons, comme indiqué sur la figure 2. Les systèmes à clabots, ne disposent pas de dispositif de synchronisation intégré. Cependant, l'engagement du rapport ne peut s'effectuer qu'après avoir réduit l'écart de régime entre le pignon et son arbre, jusqu'à un différentiel contrôlé, permettant le « crabotage », ou « clabotage » du pignon. Sur la figure 2, le moyen de couplage 9, 10 ou 11 est au neutre, en position centrale, à égale distance de deux pignons de vitesses (non représentés), à dents plates 13.

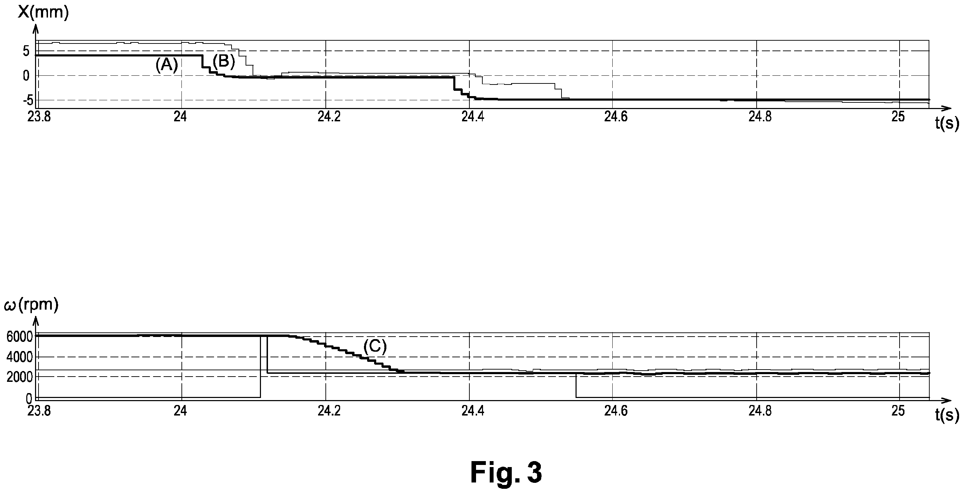

La figure 3 se rapporte à un passage d'un premier rapport électrique EV1 (rapport court) vers un deuxième rapport EV2 (rapport long) sur la boîte de vitesses de la figure 1. Elle montre les différentes étapes du passage. Les premières courbes (A) et (B) montrent la position de consigne du crabot (A), et sa position mesurée (B). Au-delà de 5mm, un premier rapport EV1 est engagé. En deçà de -5mm, un deuxième rapport EV2 est engagé. Pour changer de rapport entre EV1 et EV2, le rapport EV1 est abandonné en plaçant le crabot en position neutre à 0mm (aucun rapport engagé). Puis la ME est commandée pour tourner à un régime (courbe C) permettant l'engagement du rapport EV2, en passant de 6000rpm à environ 2200rpm. Une fois la ME stabilisée sur une vitesse assurant le bon différentiel de régime au crabot, on peut engager le crabot. Comme indiqué plus haut, à l'instant du crabotage, la ME passe brutalement d'un régime assurant un différentiel au crabot à son régime de synchronisme.

Le pignon est synchronisé et couplé avec l'arbre secondaire de la boîte de vitesses, qui est une boîte à arbres parallèles comportant au moins un arbre primaire relié à une source motrice d'un véhicule, au moins un arbre secondaire portant le pignon fou 14 pour transmettre le couple de la source motrice aux roues du véhicule sur un rapport de transmission, et au moins un moyen de couplage du pignon. Le moyen de couplage est dépourvu d'organes de synchronisation mécanique. Lors de l'accouplement, la source motrice responsable du pilotage, ici la machine électrique ME subit un saut de régime, imposé par l'arbre secondaire. L'énergie encaissée par la ME est absorbée par le véhicule. Dans cet exemple, le régime de la machine électrique diminue lors d'un passage montant de EV1 vers EV2, puisque le ratio de démultiplication des pignons EV1 est de 2,26, et celui de EV2 est de 0,87. Si juste avant de changer de rapport, la machine électrique tournait à 6000rpm, l'arbre secondaire tournait à (6000/2.26), soit $\omega 2$ = environ 2650rpm sur le rapport EV1. Pour assurer le crabotage dans les meilleurs conditions, c'est-à-dire à coup sûr, des crabots entre les dents du pignon 14, la ME est pilotée, non pas sur la vitesse exacte de synchronisation, mais pour qu'il subsiste un différentiel de régime d'environ 50rpm entre les crabots et le pignon lors du crabotage. Cette valeur est déterminée en fonction du temps maximum d'interdiction de crabotage « dent sur dent » entre les crabots et le pignon 14. Dans l'exemple décrit, on vise par exemple à craboter sur un régime de ME correspondant à une vitesse au pignon fou de 2700, de manière à viser un différentiel de 50rpm entre les crabots et le pignon lors du crabotage. La ME passe brutalement de 2700 X 0,87 = 2349 rpm ($\omega 1$) à 2650 X 0,87 = 2305rpm ($\omega 2$) à l'instant du crabotage. En considérant que le moteur a une inertie de 0,05kg.m$^2$, l'énergie E absorbée par le véhicule au moment du crabotage sur le rapport EV2, est :

$$E = J(\omega_1^2 - \omega_2^2) = 0{,}05 * (246^2 - 241^2) = 121 \, Joules$$

Pour le passage inverse de EV2 à EV1, à la même vitesse secondaire de 2650 rpm, il faut réguler la vitesse du pignon fou de EV1 à la vitesse de 2700rpm pour une vitesse de la ME $\omega$ = 6102rpm. La vitesse de la ME passe brutalement à 6000rpm au moment du crabotage. Le véhicule absorbe une énergie E :

$$E = J(\omega_1^2 - \omega_2^2) = 0{,}05 * (639^2 - 628^2) = 697 \, Joules$$

La quantité d'énergie à absorber au moment du crabotage est environ six fois plus importante que précédemment. Elle génère un choc, ressenti en particulier lors des passages en EV1 à régime élevé. Pour éviter ce ressenti, l'invention prévoit de moduler le différentiel de régime au niveau du crabot de manière particulière : non seulement en fonction du temps maximum de « dent sur dent » possible, mais aussi en fonction de l'énergie à absorber par le véhicule au crabotage. La source motrice est ainsi pilotée avant le couplage sur un régime lui imposant un différentiel de régime par rapport à son régime de synchronisation sur le rapport qui va être engagé. Le différentiel est ainsi déterminé en fonction de la quantité d'énergie absorbée par le véhicule à l'instant du couplage, en réponse à sa disparition brutale.

Pour limiter la quantité d'énergie E absorbée, on choisit de réduire le différentiel de régime à partir d'un certain régime secondaire. Il est alors calculé pour maintenir la quantité d'énergie absorbée par le véhicule lors de sa disparition, en dessous d'un seuil de tolérance.

L'énergie absorbée E en fonction du différentiel, et de la vitesse de l'arbre secondaire, peut s'écrire :

$$E = J\left(\left(\alpha(\omega + \delta)\right)^2 - (\alpha\omega)^2\right),$$

expression dans laquelle :

- E est l'énergie à absorber au moment du crabotage
- J est l'inertie de la machine électrique et des pignons en prise directe,
- $\alpha$ est le rapport de démultiplication du rapport cible,
- $\omega$ est le régime secondaire, et
- $\delta$ est le différentiel de régime au crabot.

Pour viser un niveau d'énergie E à absorber à une vitesse donnée $\omega$ au secondaire, le différentiel de régime doit être égal à :

$$\delta = \omega\left(\sqrt{1 + \frac{E}{J\alpha^2\omega^2}} - 1\right)$$

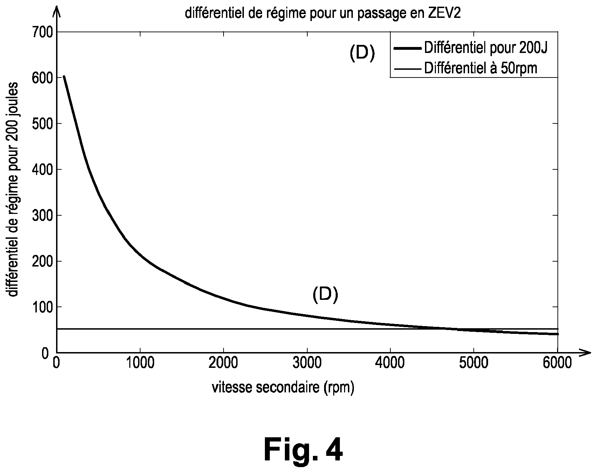

Sur la figure 4, on a tracé la courbe (D) de différentiel de régime pour avoir 200 Joule d'énergie sur un passage en EV2 en fonction du régime de la ME. En dessous de cette courbe, le seuil de 200 Joule n'est pas atteint. Jusqu'à 5000rpm, la courbe (D) est au-dessus de 50rpm. Il n'est pas nécessaire d'augmenter le différentiel pour satisfaire l'objectif de 200 Joules. Ce n'est plus le cas à partir de 5000 tours, puisque la courbe (D) passe sous le seuil de 50rpm (courbe (E)). Il est inutile d'augmenter le différentiel jusqu'à 5000rpm, puisque la valeur de 50rpm respecte déjà la contrainte de temps maximum en dent contre dent. On peut ainsi créer une cartographie de différentiel pour les passages en EV2 en prenant le minimum entre les courbes (D) et (E) bleues et vertes de la figure 4.

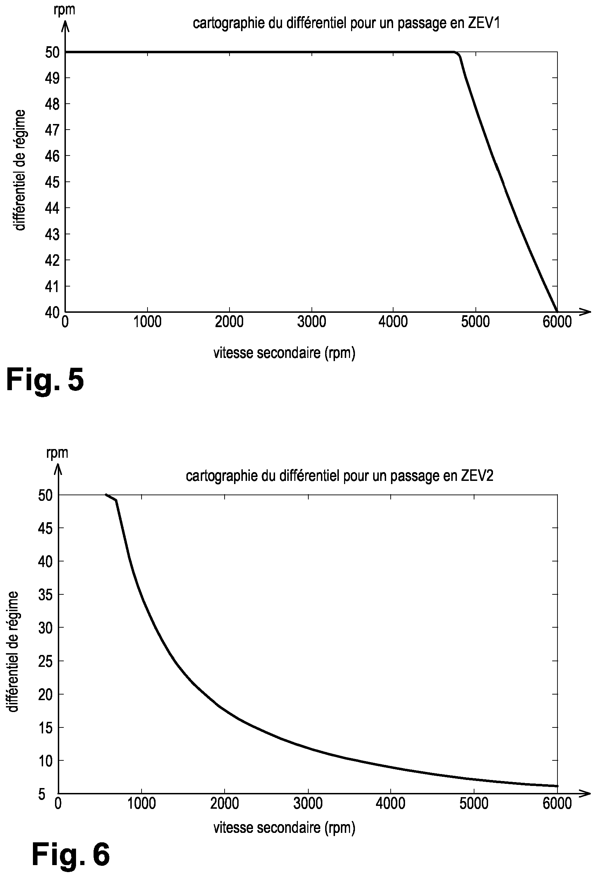

L'invention propose notamment, de maintenir le différentiel de régime à une valeur constante de référence jusqu'à un d'un seuil de régime de l'arbre secondaire, au-delà duquel il diminue en fonction de celui-ci, pour respecter le seuil de tolérance d'énergie absorbée. On obtient la cartographie de la figure 5. Dans le cas d'un passage d'EV2 à EV1, l'énergie dissipée est plus importante, et en fonction des valeurs indiquées à titre indicatif plus haut, on obtient la cartographie de la figure 6. Pour respecter le même objectif, et préserver le confort de passage, ce passage impose de réduire le différentiel de régime dès 600 rpm.

Comme dans l'exemple décrit plus haut, la valeur de référence du différentiel de régime est avantageusement de 50rpm.

Pour mettre en œuvre ce procédé dans les meilleures conditions, l'invention propose aussi d'adopter les mesures pratiques suivantes :

- déterminer la valeur constante du différentiel de régime, en fonction d'une contrainte de temps d'accostage à respecter entre des éléments du moyen de couplage et du pignon fou pour garantir leur accouplement, et/ou
- déterminer la contrainte de temps d'accostage en fonction de la surface d'entrée en contact de crabots du moyen de couplage avec des dents d'accouplement du pignon fou, lors de la progression du moyen de couplage vers le pignon fou.

Les passages de vitesses considérés ci-dessus sont des passages de rapports électriques. Toutefois, sans sortir du cadre de l'invention le même type d'analyse peut être fait pour les passages des rapports thermiques et la méthode appliquée pour maîtriser l'énergie absorbée par le véhicule lors des passages est la même.

Enfin, il peut être nécessaire de forcer le différentiel à 50rpm, même si la cartographie en donne un inférieur, dans les cas de « rétrogradage » sur un enfoncement de pédale d'accélérateur, du type « kick down » par exemple. En effet une réduction du différentiel de régime fait disparaître le choc ressenti lors du crabotage, mais peut conduire à un blocage dent contre dent plus long lors du crabotage. Le passage de rapport peut donc être légèrement plus long. Dans certains cas de rétrogradage en réponse à l'enfoncement de la pédale d'accélérateur du véhicule par le conducteur, le différentiel de régime peut donc être maintenu à sa valeur de référence, alors que le seuil de tolérance d'énergie absorbée est dépassé. Un crabotage prend en moyenne 150ms pour un différentiel à 50rpm. En divisant le différentiel par deux, on double le temps de passage. Si le conducteur souhaite une accélération franche, on force le différentiel à 50rpm pour maintenir le crabotage suffisamment rapide. Sur une accélération pied à fond, le choc est plus acceptable.

L'invention permet d'améliorer sensiblement la qualité de passage de rapports hybrides sur une boîte de vitesse telle que celle de la figure 1, en intégrant une nouvelle dimension dans le calcul du différentiel de régime pour le crabotage. Sa mise en œuvre ne nécessite qu'une modification logicielle du calcul du différentiel, dépendant désormais de la vitesse de l'arbre secondaire et du gradient de la position de la pédale d'accélération, pour identifier les cas de « kick down » par exemple.

Dans le cadre de l'invention, le différentiel de régime est établi en pilotant une machine électrique de traction du véhicule, un moteur thermique de traction du véhicule, ou l'une ou l'autre de plusieurs sources motrices, selon le mode de fonctionnement d'une transmission hybride disposant de plusieurs sources motrices.

**Revendications**

1. Procédé de synchronisation d'un pignon fou (14) avant son couplage sur un arbre secondaire de boîte de vitesses à arbres parallèles comportant au moins un arbre primaire (6) relié à une source motrice (2) d'un véhicule, au moins un arbre secondaire (7) portant le pignon fou pour transmettre le couple de la source motrice aux roues du véhicule sur un rapport de transmission et au moins un moyen de couplage (8) du pignon fou à son arbre dépourvu d'organes de synchronisation mécanique, selon lequel la source motrice est pilotée avant le couplage sur un régime lui imposant un différentiel de régime par rapport à son régime de synchronisation avec la transmission sur le rapport qui va être engagé, **caractérisé en ce que** le différentiel de régime est déterminé en fonction de la quantité d'énergie (E) absorbée par le véhicule en réponse à la disparition de ce différentiel à l'instant du couplage.

2. Procédé de synchronisation selon la revendication 1, **caractérisé en ce que** le différentiel de régime est calculé pour maintenir la quantité d'énergie absorbée par le véhicule lors de sa disparition, en dessous d'un seuil de tolérance.

3. Procédé de synchronisation d'un pignon fou selon la revendication 2, **caractérisé en ce que** le différentiel de régime est maintenu à une valeur constante de référence jusqu'à un seuil de régime de l'arbre secondaire, au-delà duquel il diminue en fonction de celui-ci pour respecter le seuil de tolérance d'énergie absorbée.

4. Procédé de synchronisation d'un pignon fou selon la revendication 3, **caractérisé en ce que** la valeur de référence du différentiel est déterminée en fonction d'une contrainte de temps d'accostage à respecter entre des éléments du moyen de couplage (8) et du pignon fou (14) pour garantir leur accouplement.

5. Procédé de synchronisation d'un pignon fou selon la revendication 4, **caractérisé en ce que** la contrainte de temps d'accostage est déterminée par la surface d'entrée en contact de crabots (12) du moyen de couplage avec des dents d'accouplement (13) du pignon fou, (14) lors de la progression du moyen de couplage vers le pignon fou.

6. Procédé de synchronisation d'un pignon fou selon la revendication 3, 4 ou 5, **caractérisé en ce que** le différentiel de régime est maintenu à sa valeur de référence, alors que le seuil de tolérance d'énergie absorbée est dépassé, dans certains cas de rétrogradage en réponse à l'enfoncement de la pédale d'accélérateur du véhicule par le conducteur.

7. Procédé de synchronisation d'un pignon fou selon l'une des revendications précédentes, **caractérisé en ce que** la valeur de référence du différentiel de régime est d'environ 50rpm.

8. Procédé de synchronisation d'un pignon fou selon l'une des revendications précédentes, **caractérisé en ce que** le différentiel de régime est établi en pilotant une machine électrique (ME) de traction du véhicule.

9. Procédé de synchronisation d'un pignon fou selon l'une des revendications précédentes, **caractérisé en ce que** différentiel de régime est établi en pilotant un moteur thermique (Mth) de traction du véhicule.

10. Procédé de synchronisation d'un pignon fou selon la revendication 8 ou 9, **caractérisé en ce que** le différentiel de régime est établi en pilotant l'une ou l'autre de plusieurs sources motrices, selon le mode de fonctionnement d'une transmission hybride disposant de plusieurs sources motrices.

**Patentansprüche**

1. Verfahren zur Synchronisation eines Freilauf-Zahnrads (14) vor dessen Kopplung an eine Nebenwelle eines Getriebes mit parallelen Wellen, das mindestens eine Hauptwelle (6), die mit einer Antriebsquelle (2) eines Fahrzeugs verbunden ist, mindestens eine Nebenwelle (7), die das Freilauf-Zahnrad trägt, um das Drehmoment der Antriebsquelle mit einem Übersetzungsverhältnis an die Räder des Fahrzeugs zu übertragen, und mindestens ein Mittel zur Kopplung (8) des Freilauf-Zahnrads an dessen Welle ohne Elemente zur mechanischen Synchronisation aufweist, wobei die Antriebsquelle vor der Kopplung auf eine Drehzahl gesteuert wird, die ihr eine Drehzahldifferenz zu ihrer Drehzahl der Synchronisation mit dem Getriebe in dem Gang, der eingelegt wird, aufzwingt, **dadurch gekennzeichnet, dass** die Drehzahldifferenz in Abhängigkeit von der Energiemenge (E) bestimmt wird, die vom Fahrzeug in Reaktion auf den Wegfall dieser Differenz zum Zeitpunkt der Kopplung absorbiert wird.

2. Synchronisationsverfahren nach Anspruch 1, **dadurch gekennzeichnet, dass** die Drehzahldifferenz berechnet wird, um die Energiemenge, die vom Fahrzeug bei ihrem Wegfall absorbiert wird, unter einer Toleranzschwelle zu halten.

3. Verfahren zur Synchronisation eines Freilauf-Zahnrads nach Anspruch 2, **dadurch gekennzeichnet, dass** die Drehzahldifferenz bis zu einer Drehzahlschwelle der Nebenwelle auf einem konstanten Referenzwert gehalten wird, über welcher sie in Abhängigkeit davon abnimmt, um die Toleranzschwelle absorbierter Energie einzuhalten.

4. Verfahren zur Synchronisation eines Freilauf-Zahnrads nach Anspruch 3, **dadurch gekennzeichnet, dass** der Referenzwert der Differenz in Abhängigkeit von einer einzuhaltenden Zeitvorgabe für die Ankopplung zwischen Elementen des Kopplungsmittels (8) und des Freilauf-Zahnrads (14) bestimmt wird, um deren Kupplung zu gewährleisten.

5. Verfahren zur Synchronisation eines Freilauf-Zahnrads nach Anspruch 4, **dadurch gekennzeichnet, dass** die Ankopplungszeitvorgabe von der Fläche des Inkontakttretens von Klauen (12) des Kopplungsmittels mit Kupplungszähnen (13) des Freilauf-Zahnrads (14) bei der Bewegung des Kopplungsmittels hin zum Freilauf-Zahnrad bestimmt wird.

6. Verfahren zur Synchronisation eines Freilauf-Zahnrads nach Anspruch 3, 4 oder 5, **dadurch gekennzeichnet, dass** in bestimmten Fällen des Herunterschaltens in Reaktion auf das Durchtreten des Gaspedals des Fahrzeugs durch den Fahrer die Drehzahldifferenz auf ihrem Referenzwert gehalten wird, während die Toleranzschwelle absorbierter Energie überschritten wird.

7. Verfahren zur Synchronisation eines Freilauf-Zahnrads nach einem der vorhergehenden Ansprüche, **dadurch gekennzeichnet, dass** der Referenzwert der Drehzahldifferenz ungefähr 50 U/min beträgt.

8. Verfahren zur Synchronisation eines Freilauf-Zahnrads nach einem der vorhergehenden Ansprüche, **dadurch gekennzeichnet, dass** die Drehzahldifferenz durch Steuerung einer elektrischen Antriebsmaschine (ME) des Fahrzeugs hergestellt wird.

9. Verfahren zur Synchronisation eines Freilauf-Zahnrads nach einem der vorhergehenden Ansprüche, **dadurch gekennzeichnet, dass** die Drehzahldifferenz durch Steuerung eines Antriebsverbrennungsmotors (Mth) des Fahrzeugs hergestellt wird.

10. Verfahren zur Synchronisation eines Freilauf-Zahnrads nach Anspruch 8 oder 9, **dadurch gekennzeichnet, dass** die Drehzahldifferenz durch Steuerung der einen oder anderen mehrerer Antriebsquellen gemäß der Betriebsart eines Hybridgetriebes, das über mehrere Antriebsquellen verfügt, hergestellt wird.

**Claims**

1. Method for synchronizing an idler gear (14) before coupling of same on a secondary shaft of a parallelshaft gearbox containing at least one primary shaft (6) connected to a drive source (2) of a vehicle, at least one secondary shaft (7) carrying the idler gear for transmitting the torque from the drive source to the wheels of the vehicle at a transmission ratio and at least one means of coupling (8) the idler gear to the shaft of same having no mechanical synchronization members, according to which the drive source is controlled, before coupling, at a speed imposing on it a speed differential with respect to the synchronization speed thereof at the transmission ratio which is to be engaged, **characterized in that** the speed differential is determined as a function of the quantity of energy (E) absorbed by the vehicle at the time of coupling in response to the disappearance of this differential.

2. Method for synchronizing according to Claim 1, **characterized in that** the speed differential is calculated in order to maintain the quantity of energy absorbed by the vehicle below a tolerance threshold at the time of the disappearance of the differential.

3. Method for synchronizing an idler gear according to Claim 2, **characterized in that** the speed differential is maintained at a constant reference value up to a speed threshold of the secondary shaft, beyond which it reduces as a function thereof in order to meet the tolerance threshold of absorbed energy.

4. Method for synchronizing an idler gear according to Claim 3, **characterized in that** the reference value of the differential is determined as a function of a meshing time constraint to be met between elements of the means of coupling (8) and the idler gear (14) in order to guarantee their coupling.

5. Method for synchronizing an idler gear according to Claim 4, **characterized in that** the meshing time constraint is determined by the surface of entry into contact of dogs (12) of the means of coupling with coupling teeth (13) of the idler gear (14) during the progression of the means of coupling towards the idler gear.

6. Method for synchronizing an idler gear according to Claim 3, 4 or 5, **characterized in that** the speed differential is maintained at its reference value, whereas the tolerance threshold of absorbed energy is exceeded, in certain cases of down-shifting, in response to the depression of the accelerator pedal of the vehicle by the driver.

7. Method for synchronizing an idler gear according to one of the preceding claims, **characterized in that** the reference value of the speed differential is of the order of 50 rpm.

8. Method for synchronizing an idler gear according to one of the preceding claims, **characterized in that** the speed differential is established by operating an electrical traction machine (ME) of the vehicle.

9. Method for synchronizing an idler gear according to one of the preceding claims, **characterized in that** speed differential is established by operating a thermal traction engine (Mth) of the vehicle.

10. Method for synchronizing an idler gear according to Claim 8 or 9, **characterized in that** the speed differential is established by controlling one or other of a plurality of drive sources according to the mode of operation of a hybrid transmission having a plurality of drive sources.

5 (HSG)

10

1

11

3 (Mth)

9

6

(ME) 2

4

7

14

14

8

[ EV1 ]     [ EV2 ]     [ Th2 ]     [ Th4 ]

**Fig. 1**

13

12

9,10,11

**Fig. 2**

Fig. 3

Fig. 4

Fig. 5

Fig. 6

## RÉFÉRENCES CITÉES DANS LA DESCRIPTION

**Documents brevets cités dans la description**

- EP 2834541 A
- WO 2011036394 A1
- DE 102015010598 A1
- EP 2730814 A1
- DE 19956527 A1